Europäisches Patentamt

(19) European Patent Office

Office européen des brevets

(11) Veröffentlichungsnummer: **0 005 839**
**B1**

(12) **EUROPÄISCHE PATENTSCHRIFT**

(45) Veröffentlichungstag der Patentschrift: **01.04.81**

(21) Anmeldenummer: **79101681.9**

(22) Anmeldetag: **31.05.79**

(51) Int. Cl.³: **B 60 K 17/22, B 60 K 5/12**

(54) Trieb- und Fahrwerksanordnung für Kraftfahrzeuge.

(30) Priorität: **02.06.78 DE 2824241**

(43) Veröffentlichungstag der Anmeldung:
**12.12.79 Patentblatt 79/25**

(45) Bekanntmachung des Hinweises auf die Patenterteilung:
**01.04.81 Patentblatt 81/13**

(84) Benannte Vertragsstaaten:
**DE FR GB IT SE**

(56) Entgegenhaltungen:
**DE - A - 1 405 967**
**DE - A - 1 908 231**
**DE - B - 1 555 163**
**FR - A - 2 322 021**
**GB - A - 990 809**
**US - A - 3 167 149**

**ATZ Automobiltechnische Zeitschrift,**
**Band 78, Nr. 6, 1976; Stuttgart**
**R. V. SIVERS et al. "Der Antriebsstrang**
**des Porsche 924",**
**Seiten 259 bis 262**

(73) Patentinhaber: **FORD-WERKE AKTIENGESELLSCHAFT**
**Ottoplatz 2 Postfach 210369**
**D-5000 Köln 21 (DE)**

(73) Patentinhaber: **FORD MOTOR COMPANY LIMITED**
**Eagle Way**
**Brentwood Essex CM13 3BW (GB)**

(73) Patentinhaber: **Ford France S.A.**
**344 Avenue Napoleon Bonaparte B.P. 307**
**F-92506 Rueil Malmaison Cedex (FR)**

(72) Erfinder: **Weiss, Manfred**
**Benedikt-Pesch-Strasse 46**
**D-5024 Pulheim-Stommeln (DE)**

(74) Vertreter: **Höhn, Bernhard, Dipl.-Ing. et al,**
**Ford-Werke Aktiengesellschaft Patentabteilung**
**Z/DRR-2 Ottoplatz 2**
**D-5000 Köln 21 (DE)**

## Trieb- und Fahrwerksanordnung für Kraftfahrzeuge

Die Erfindung bezieht sich auf eine Trieb- und Fahrwerksanordnung für Kraftfahrzeuge, mit einer vornliegenden Triebwerks-Einheit, die über einen biegesteifen, die Kardanwelle umfassenden Verbindungsträger mit einer hinten liegenden Fahrwerks -Einheit verbunden ist.

Aus der DE—OS 1 405 967 ist bereits eine Trieb- und Fahrwerksanordnung der eingangs genannten Art bekannt. Bei dieser bekannten Trieb- und Fahrwerksanordnung ist eine Motor-Getriebe-Einheit über den biegesteifen Verbindungsträger entweder starr mit einem sich bewegenden Teil einer Differential-Radaufhängungs-Einheit wie z.B. einer Starrachse verbunden oder aber über ein Gelenk an einem Hilfsträger der Karosserie schwenkbeweglich abgestützt.

Diese bekannte Trieb- und Fahrwerksanordnung weist in einem Fall den Nachteil auf, dass die Motor-Getriebe-Einheit durch die vertikalen Ein- und Ausfederungsbewegungen der Hinterachse in unregelmässige Schwenkbewegungen um eine durch die Motorlager laufende Querachse versetzt wird und andererseits durch Drehmomentreaktionen verursachte Schwenkbewegungen der Motor-Getriebe-Einheit um ihre Längsachse auf die Hinterachse einwirken. Im anderen Fall werden die durch Drehmomentreaktionen der Motor-Getriebe-Einheit verursachten Schwenkbewegungen durch den drehsteifen, als Rohr ausgebildeten Verbindungsträger auf einer kleinen Basis in den an der Bodengruppe der Karosserie ausgebildeten Hilfsträger eingeleitet, wodurch die Bodengruppe zu Schwingungen angeregt werden kann.

Eine Trieb- und Fahrwerksanordnung der eingangs genannten Art ist auch durch den Peugeot 504 bekannt, bei dem eine vorne liegende Motor-Getriebe-Einheit über einen biegesteifen, die Kardanwelle umfassenden und als drehsteifes Rohr ausgebildeten Verbindungsträger mit einer hinten liegenden Differential-Radaufhängungs-Einheit verbunden ist. Bei dieser bekannten Trieb- und Fahrwerksanordnung ist das Differential über einen eigenen Querträger elastisch an der Karosserie abgestützt, während die Radaufhängung über einen davon getrennten Hinterachsquerträger auf breiter Basis elastisch an der Karosserie abgestützt ist.

Diese bekannte Trieb- und Fahrwerksanordnung ist bereits günstiger als die erstgenannte Anordnung, weist jedoch den Nachteil auf, dass durch die drehfeste Ausführung des Verbindungsträgers nach wie vor die durch Drehmomentreaktionen verursachten Schwenkbewegungen auf das Differential und über dessen Hilfsträger auf die Karosserie übertragen werden. Darüber hinaus ist diese bekannte Anordnung durch ihre beiden getrennten, hinteren Querträger verhältnismässig aufwendig.

Die Aufgabe der Erfindung ist es, eine Trieb- und Fahrwerksanordnung der eingangs genannten Art derart zu verbessern, dass die durch Drehmomentreaktionen der Triebwerks -Einheit verursachten Schwenkbewegungen im wesentlichen von der Fahrwerks -Einheit fern gehalten werden und darüber hinaus der Verbindungsträger in seiner Herstellung und Montage einfacher wird und noch weitere Funktionen übernehmen kann.

Gemäss der Erfindung wird diese Aufgabe gelöst, indem eine Trieb- und Fahrwerksanordnung, die im Patentanspruch 1 und den weiteren Ansprüchen aufgezeigten Merkmale aufweist.

Durch die erfindungsgemäße Ausbildung des biegesteifen Verbindungsträgers als verdrehweiches, einen im wesentlichen U-förmigen Querschnitt aufweisendes Bauteil, das mit dem z.B. eine Differential-Radaufhängungs-Einheit tragenden Hinterachsquerträger starr verbunden ist, wird eine Übertragung von Schwenkbewegungen der Motor-Getriebe-Einheit um ihre Längsachse auf die Differential-Radaufhängungs-Einheit durch elastische Verwindung des verdrehweichen Verbindungsträgers weitestgehend vermieden. Die Ausbildung des einen U-förmigen Querschnitt aufweisenden Bauteiles als Blechpreßteil ermöglicht eine einfache Herstellung und leichte Montage. Er übernimmt die Funktion der hinteren Motoraufhängung und macht eine Befestigung des Differentials ohne zusätzlichen Abstützpunkt möglich. In dem einseitig offenen Verbindungsträger können in güstiger Weise ein Kardanwellenmittellager sowie die erforderlichen Gestänge für die Gangschaltung und die Handbremse angeordnet werden.

Die erfindungsgemässe Trieb- und Fahrwerksanordnung ermöglicht es, die schwingungstechnisch kritischen Bauteile eines Kraftfahrzeuges wie Motor-Getriebe-Einheit, Kardanwelle und Differential-Radaufhängungs-Einheit an der selbsttragenden Karosserie eines Kraftfahrzeuges derart abzustützen, dass das gegen Schwingungen besonders anfällige Bodenblech nicht berührt wird.

Die Erfindung wird anhand eines in den Zeichnungen gezeigten Ausführungsbeispiels näher erläutert. Es zeigt:

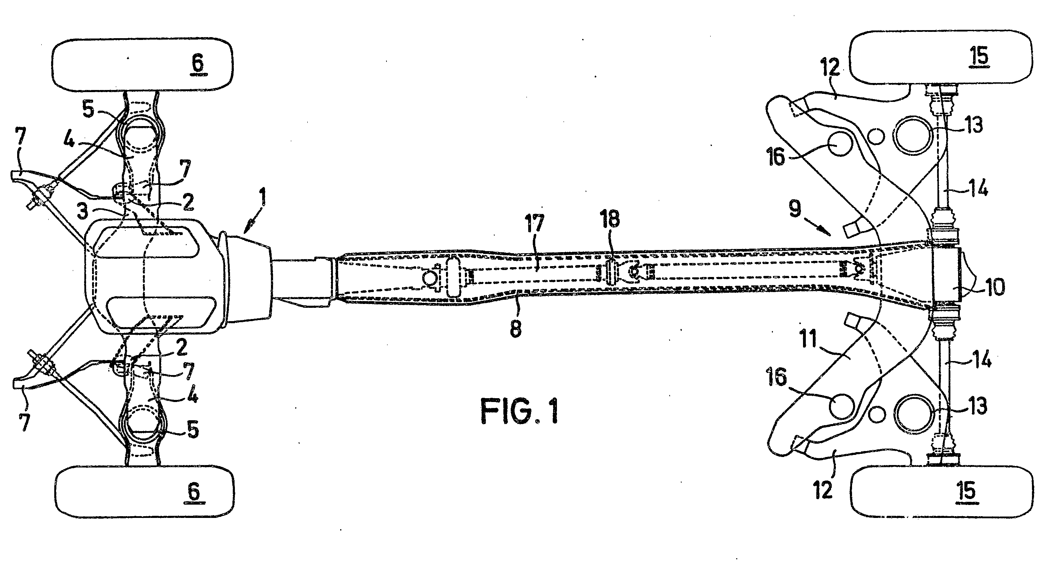

Figur 1: Eineschematische Draufsicht auf eine Trieb- und Fahrwerksanordnung gemäss der Erfindung;

Figur 2: eineschematische Seitenansicht der Trieb- und Fahrwerksanordnung nach Figur 1 und;

Figur 3: einen Schnitt entlang der Linie III—III in Figur 2.

In den Figuren ist eine bekannte Motor-Getriebe-Einheit 1 in herkömmlicher Weise über 2 seitliche elastische Motorlager 2 auf einem Vorderachsquerträger 3 abgestützt, an dem die Querlenker 4 und die Schraubenfedern 5 für die unabhängig aufgehängten Vorderräder 6 des Kraftfahrzeuges angeordnet sind. Der Vorderachsquerträger 3 ist in kekannter Weise über elastische Elemente 7 an der Karosserie (nicht gezeigt) abgestützt.

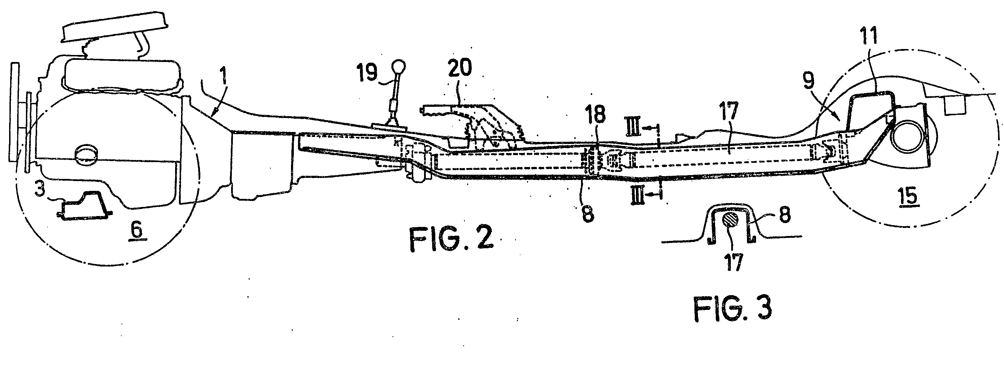

Die Motor-Getriebe-Einheit 1 ist über einen biegesteifen, jedoch verdrehweichen Verbindungsträger 8 mit einer Differential-Radaufhängungs-Einheit 9 starr verbunden. Der Verbindungsträger 8 ist hierbei als ein Blechpressteil mit einem im wesentlichen U-förmigen Querschnitt ausgebildet. Vorzugsweise ist der Verbindungsträger 8 mit seiner offenen Seite nach unten weisend angeordnet und ist an seinen freien Seitenkanten mit die Biegesteifigkeit erhöhenden, die Verdrehweichheit jedoch kaum beeinträchtigenden Abkantungen versehen (sh. Figur 3).

Die Differential-Radaufhängungs-Einheit 9 besteht in bekannter Weise aus einem Differential 10, das an einem Hinterachsquerträger 11 befestigt ist, an dem in üblicher Weise die Schräglenker 12 für die über Schraubenfedern 13 abgefederten und über Achswellen 14 angetriebenen, unabhängig aufgehängten Hinterräder 15 angeordnet sind. Der Hinterachsquerträger 11 ist in bekannter Weise über elastische Elemente 16 auf einer breiten Basis an der Karosserie (nicht gezeigt) abgestützt.

Der verdrehweiche Verbindungsträger 8 umfasst die die Motor-Getriebe-Einheit 1 mit der Differential-Radaufhängungs-Einheit 9 verbindende Kardanwelle 17, die über eine Kardanwellenmittellagerung 18 abgestützt sein kann. Das Kardanwellenmittellager 18 stützt sich unmittelbar am Verbindungsträger 8 ab. Da der Verbindungsträger 8 über seinen gesamten Bereich keine Verbindung mit der Bodengruppe der Karosserie besitzt wird damit die Übertragung von Schwingungen der Kardanwelle, wie sie durch Ungleichförmigkeit der Drehbewegung als Folge von Beugewinkelfehler auftreten sicher vermieden.

Der Verbindungsträger 8 ist infolge seines U-förmigen Querschnittes verhältnismässig einfach als Blechpressteil herzustellen und ermöglicht gegenüber den bekannten biege- und verdrehsteifen Verbindungsrohren eine wesentlich einfachere Montage der Kardanwelle 17.

Der Verbindungsträger 8 weist durch seinen U-förmigen Querschnitt weiterhin den Vorteil auf, dass an seiner oberen, geschlossenen Basis in einfacher Weise der Gangschalthebel 19 und die Handbremse 20 montiert und nach der unten hin offenen Seite mit ihren entsprechenden Gestängeteilen verbunden werden können. Die für die Bedienung notwendigen oberen Teile des Gangschalthebels 19 und der Handbremse 20 werden durch entsprechende Öffnungen im Bodenblech, die durch elastische Bälge abgedichtet sind, in das Fahrzeuginnere geführt. Aus den Betätigungsgestängen des Gangschalthebels 19 und der Handbremse 20 herrührende Schwingungen werden somit wieder von dem schwingungsempfindlichen Bodenblech der Karosserie ferngehalten.

Der Verbindungsträger 8 kann helfen, die bisher im Antriebsstrang eines Kraftfahrzeuges vorhandenen grossen Toleranzen in Zukunft kleiner zu halten und ggf. die Montage der Trieb- und Fahrwerksanordnung an der Karosserie durch eine entsprechende Vormontage zu vereinfachen.

Die Trieb- und Fahrwerksanordnung mit dem biegesteifen, jedoch verdrehweichen Verbindungsträger ermöglicht eine fast hundertprozentige Übertragung des Reaktionsmomentes der Motor-Getriebe-Einheit über die Karosserie auf das Differential während der Verbindungsträger weniger als ein Prozent überträgt. Die grosse Abstützbasis des Verbindungsträgers stellt sicher, dass einerseits die Schwenkbewegungen der Motor-Getriebe-Einheit und ihre Längsachse nicht eingeschränkt wird, während andererseits die Nickbewegungen der Motor-Getriebe-Einheit um ihre Querachse weitgehend beseitigt werden.

Die Baugruppe aus dem verdrehweichen Verbindungsträger und dem Hinterachsquerträger kann unter Umständen bei Weiterführung des Erfindungsgedankens zu einer integrierten Längs-Querverbindungsträgeranordnung führen.

Die für die Anordnung eines derartigen Verbindungsträgers erforderlichen Herstellungs- und Montagekosten erscheinen zunächst beträchtlich. Es muss jedoch darauf hingewiesen werden, dass durch den Verbindungsträger eine ansonsten erforderliche hintere Motorabstützung und ebenso eine ansonsten erforderliche zusätzliche Abstützung des Differentials entfallen können. Darüber hinaus sind Einsparungen an Montagezeit für die Montage der Kardanwelle, des Gangschalthebels mit seinem Gestänge und der Handbremse mit ihrem Gestänge zu erzielen, da diese Baugruppen an dem durch den Verbindungsträger gebildeten, zusammenhängenden Antrieb- und Fahrwerksstrang vormontiert werden können, bevor die Karosserie des Kraftfahrzeuges mit dem Antriebs- und Fahrwerksstrang verbunden wird.

Eine Trieb- und Fahrwerkanordnung gemäß der Erfindung wurde in Zusammenhang mit den Figuren für eine weit verbreitete Trieb- und Fahrwerkanordnung beschrieben, bei der die Triebwerks-Einheit aus einer Motor-Kupplung-Getriebeeinheit und die Fahrwerks-Einheit aus einer Differential-Radaufhängungs-Einheit bestehen, wobei an einem an der Karosserie über elastische Elemente abgestützten Hinterachsquerträger Schräglenker für die über Schraubenfedern abgefederten und über Achswellen angetriebenen, unabhängig aufgehängten Hinterrädern angeordnet sind. Es ist jedoch selbstverständlich, daß der biegesteife, verdrehweiche Verbindungsträger gemäß der Erfindung auch bei Trieb- und Fahrwerksanordnungen anwendbar ist, bei denen die einzelnen Baueinheiten z.B. nach dem Transaxle-Prinzip angeordnet sind und die Hinterachseinheit z.B. nach Art einer De Dion-Achse ausgebildet ist.

Es muß auch nicht näher erläutert werden, daß, wie in den Patentansprüchen aufgezeigt, der biegesteife, verdrehweiche Verbindungsträger nicht nur als Blechpreßteil ausgebildet werden kann sondern daß er ggf in gleichgünstiger Weise als dünnwandiges Gußbauteil aus Temper- oder Leichtmetallguß hergestellt werden kann. Ebenso ist abzusehen, daß dieser Verbindungsträger auch in günstiger Weise als glasfaserverstärktes oder graphitfaserverstärktes Kunststoffbauteil ausgebildet werden kann.

Die gleichen vielfältigen Ausführungsmöglichkeiten gelten hierbei auch für die Kardanwelle, die in der Zeichnung als herkömmmlich, geteilte Kardanwelle ausgebildet ist. Auch hier ist eine einteilige flexible Kardanwelle aus Stahl oder faserverstärkten Kunststoffen möglich.

Das gleiche gilt hierbei für die Ausführungsmöglichkeiten der Radführungs-Federungs- und Antriebselemente.

## Patentansprüche

1. Trieb- und Fahrwerksanordnung für Kraftfahrzeuge mit einer vornliegenden Triebswerke-Einheit (1), die über einen biegesteifen, die Kardanwelle umfassenden Verbindungsträger (8) mit einer hintenliegenden Fahrwerks-Einheit (9) verbunden ist, dadurch gekennzeichnet, daß der mit der Triebswerke-Einheit (1) verbundene, biegesteife Verbindungsträger (8) als verdrehweiches, einen im wesentlichen U-förmigen Querschnitt aufweisendes Bauteil ausgebildet und mit der Fahrwerks-Einheit (9) starr verbunden ist.

2. Trieb- und Fahrwerksanordnung nach Anspruch 1, dadurch gekennzeichnet, daß die Triebwerks-Einheit (1) aus den miteinander verbundenen Motor-Kupplung- und Getriebeeinheiten besteht und die Fahrwerks-Einheit (9) aus den miteinander verbundenen Differentialeinheit (10) und Hinterachsträger (11) besteht, an dem die Radführungsglieder (12) für die über Federelemente (13) abgefederte und über Achswellen (14) angetriebenen Hinterräder (15) angeordnet sind.

3. Trieb- und Fahrwerksanordnung nach Anspruch 1, dadurch gekennzeichnet, daß die Triebswerks-Einheit (1) aus den miteinander verbundenen Motor- und Kupplungseinheiten besteht und die Fahrwerks-Einheit (9) aus den miteinander verbundenen Getriebe- und-Differentialeinheit und Hinterachsträger (11) besteht, an dem Radführungsglieder (12) für die über Federelemente (13) abgefederte und über Achswellen (14) angetriebene Hinterräder (15) angeordnet sind.

4. Trieb- und Fahrwerksanordnung nach einem der Ansprüche 1 bis 3, dadurch gekennzeichnet, daß die Hinterachseinheit aus einem an der Karosserie über eleastische Elemente (16) abgestützten Hinterachsquerträger (11) besteht, an dem Schräglenker (12) für die über Schraubenfedern (13) abgefederten und über Achswellen (14) angetriebenen, unabhängig aufgehängten Hinterrädern (15) angeordnet sind.

5. Trieb- und Fahrwerkanordnung nach einem der Ansprüche 1 bis 4, dadurch gekennzeichnet, daß der verdrehweiche Verbindungsträger (8) als ein einstückiges Blechpreßteil ausgebildet ist.

6. Trieb- und Fahrwerkanordnung nach einem der Ansprüche 1 bis 4, dadurch gekennzeichnet, daß der verdrehweiche Verbindungsträger (8) als ein einstückiges dünnwandiges Gußteil aus Temper- oder Leichtmetallguß ausgebildet ist.

7. Trieb- und Fahrwerkanordnung nach einem der Ansprüche 1 bis 4, dadurch gekennzeichnet, daß der verdrehweiche Verbindungsträger (8) als ein einstückiges, faserverstärktes Kunststoffbauteil ausgebildet ist.

8. Trieb- und Fahrwerkanordnung nach einem der Ansprüche 1 bis 7, dadurch gekennzeichnet, daß der verdrehweiche Verbindungsträger (8) ein Kardanwellenmittellager (18) für die Kardanwelle (17) sowie den Gangschalthebel (19) und die Handbremse (20) trägt.

9. Trieb- und Fahrwerkanordnung nach einem der Ansprüche 1 bis 8, dadurch gekennzeichnet, daß der biegesteife, verdrehweiche Verbindungsträger (8) mit dem Hinterachsquerträger (11) als ein integriertes Bauteil ausgebildet ist.

10. Trieb- und Fahrwerkanordnung nach einem der Ansprüche 1 bis 9, dadurch gekennzeichnet, daß die Differential- bzw Getriebe-Differential-Einheit in der Fahrwerkseinheit (9) elastisch gelagert aufgenommen ist.

## Claims

1. Power- and suspension arrangement for motor vehicles with a power assembly (1) in front which is connected with a suspension assembly (9) at the rear by a flexurally stiff connecting beam (8) surrounding the drive shaft, characterized in that the flexurally stiff connecting beam (8) connected with the power assembly is in the form of a torsionally resilient member, substantially U-shaped in cross section, and is rigidly connected with the suspension assembly.

2. Power- and suspension arrangement according to claim 1, characterized in that the power assembly (1) consists of the mutually connected engine- clutch- and gear transmission unit and that the suspension assembly (9) consists of the mutually connected differential unit (10) and the rear-axle carrier (1) on which the wheel-guiding members (12) are mounted for the rear wheels (15) which are sprung by the spring members (13) and driven by the axle shafts (14).

3. Power- and suspension arrangement according to claim 1, characterized in that the power assembly (1) consists of the mutually connected engine- and clutch units and that the suspension assembly (9) consists of the mutually connected gear tranmission- cum-differential unit and rear-axle carrier (11), on which the wheel-guiding members (12) are mounted for the wheels (15) sprung by spring members (13) and driven by axle shafts (14).

4. Power- and suspension arrangement according to any one of the claims 1 to 3, characterized in that the rear-axle unit consists of a transverse rear-axle support (11) propped against the car body via elastic members (16), with wishbones (12) mounted on the support (11) for the independently suspended rear wheels (15), sprung by coil springs (13) and driven by axle shafts (14).

5. Power- and suspension according to any one of the claims 1 to 4, characterized in that the torsionally resilient connecting beam (8) is in the form of a one-piece pressed-sheet member.

6. Power- and suspension arrangement according to any one of the claims 1 to 4, characterized in that the torsionally resilient connecting beam (8) is in the form of a one-piece thin-walled casting of malleable cast iron or light metal.

7. Power- and suspension arrangement according to any one of the claims 1 to 4, characterized in that the torsionally resilient connecting beam (8) is in the form of a one-piece, fibre-reinforced plastic member.

8. Power- and suspension arrangement according to any one of the claims 1 to 7, characterized in that the torsionally resilient connecting beam (8) carries an intermediate drive shaft bearing (18) for the drive shaft (17), as well as the gear shift lever (19) and the hand brake (20).

9. Power- and suspension arrangement according to any one of the claims 1 to 8, characterized in that the torsionally resilient connecting beam (8) and the transverse rear-axle support (11) form an integrated member.

10. Power- and suspension arrangement according to any one of the claims 1 to 9, characterized in that the differential or gear transmission- cum-differential unit is elastically supported in the suspension assembly (9).

**Revendications**

1. Ensemble moto-propulseur pour voitures automobiles avec un groups moteur avant (1), relié par un longeron de liaison (8) à grande rigidité à la flexion et entourant l'arbre de transmission, au groupe arrière de propulsion et de suspension (9), caractérisé en ce que le longeron de liaison (8) à grande rigidité à la flexion est relié au groupe moteur (1), et consiste en un élément avec une section en U ayant un faible rigidité à la torsion et qu'il est assemblé rigidement au groupe arrière de propulsion et de suspension (9).

2. Ensemble moto-propulseur suivant la revendication 1, caractérisé en ce que le groupe moteur consiste en une unité constituée par un moteur, un embrayage et une boîte de vitesses et que le groupe de propulsion et de suspension (9) consiste en une unité constituée par le différentiel (10), et la traverse d'essieu (11) à laquelle sont fixés les bras triangulaires (12) supportant les ressorts cylindriques ainsi que les roues arrières (15) entraînées (13) par les arbres à roue (14).

3. Ensemble moto-propulseur suivant la revendication 1, caractérisé en ce que le groupe moteur (1) consiste en une unité constituée par un moteur et un embrayage et que le groupe de propulsion et de suspension (9) consiste en une unité constituée par une boîte de vitesses, un différentiel et la traverse d'essieu (11) à lacquelle sont fixés les bras triangulaires (12) supportant les ressorts cylindriques (13) ainsi que les roues arrières (15) entraînées par les arbres à roue (14).

4. Ensemble moto-propulseur, suivant l'une des revendications 1 à 3, caractérisé en ce que le groupe de suspension arrière consiste en une traverse d'essieu (11), s'appuiant sur las caisse par des cales élastiques (16) et à laquelle sont fixés les bras triangulaires obliques (12) supportant les ressorts cylindriques (13) ainse que les roues indépendantes (15) entraînées par les arbres à roue (14).

5. Ensemble moto-propulseur, suivant l'une des revendications 1 à 4, caractérisé en ce que le longeron de liaison (8) à faible rigidité à la torsion est réalisé en une seule pièce en tôle emboutie.

6. Ensemble moto-propulseur, suivant l'une des revendications 1 à 4, caractérisé en ce que le longeron de liaison (8) à faible rigidité à la torsion est coulé en une seule pièce à parois minces en fonte ou en alliage léger.

7. Ensemble moto-propulseur suivant l'une des revendications 1 à 4, caractérisé en ce que le longeron de liaison (8) à faible rigidité à la torsion est réalisé en une seule pièce en matière plastique renforcé de fibres.

8. Ensemble moto-propulseur suivant l'une des revendications 1 â 7, caractérisé en ce que le longeron de liaison '(8) à faible rigidité à la torsion sert d'appui au roulement intermédiaire (18) de l'arbre de transmission (17) ainsi qu'au levier de vitesses (19) et au frein à main (20).

9. Ensemble moto-propulseur suivant l'une des revendications 1 à 8, caractérisé en ce que le longeron de liaison (8) à grande rigidité à la flexion et faible rigidité à la torsion forme un ensemble intégré avec la traverse d'essieu (11).

10. Ensemble moto-propulseur suivant l'une des revendications 1 à 9, caractérisé en ce que l'unité différentiel, resp. l'unité boîte de vitesses-différentiel est reliée d'une manière élastique au groupe de suspension (9).

FIG. 1

FIG. 2

FIG. 3